# EUROPEAN PATENT APPLICATION

(11) **EP 4 610 000 A1**
(43) Date of publication of application: **03.09.2025**
(21) Application number: 25160598.6
(22) Date of filing: 27.02.2025
(51) Int. Cl.: B25J 9/16

(54) **SYSTEM FOR AUTONOMOUS ROBOTIC INSPECTION IN SPACE**

(30) Priority: 28.02.2024 US 202463558904 P
(71) Applicant: MacDonald, Dettwiler and Associates Inc., Brampton, Ontario L6Y 6K7 (CA)
(72) Inventor: Bondy, Michel, Brampton, Ontario, L6Y 6K7 (CA); Caldwell, Jack Austin, Brampton, Ontario, L6Y 6K7 (CA); Stolpner, Svetlana, Brampton, Ontario, L6Y 6K7 (CA); Arnold, Katherine, Brampton, Ontario, L6Y 6K7 (CA); Langley, Christopher Stewart, Brampton, Ontario, L6Y 6K7 (CA); Shi, Jian-Feng, Brampton, Ontario, L6Y 6K7 (CA); Sorocky, Michael Joseph, Brampton, Ontario, L6Y 6K7 (CA)
(74) Representative: Grünecker Patent- und Rechtsanwälte PartG mbB

(57) **Abstract**

An autonomous inspection system for detecting and avoiding threats during operation of a robotic system comprising a robotic device is provided. The robotic device performs a series of robotic operations each including a path and a trajectory. The autonomous inspection system includes a memory device for storing data and a processor in communication with the memory device and for processing the data stored by the memory device. The processor is configured to execute at least one of an autonomous sensing of unexpected obstacles (ASUO) software tool, a model-based collision avoidance (MBCA) software tool, a worksite surveyor (WS) software tool, and a vision-guided motion (VGM) software tool, to detect threats during the series of robotic operations.

## Description

### Technical Field

The following relates generally to space-based robotics, and more particularly to systems and methods for autonomous robotic operations in space.

### Introduction

Safe operation of robotic systems, including the protection of personnel and expensive equipment, is critical in space-based applications. Typically, inspection operations are performed to ensure safe operation of the robotic system. Historically, these inspection operations have been performed with a remote or in-person operator. For example, current planning process for worksite survey operations on the ISS requires ground crew to manually assess the need for an inspection then schedule it into the task being planned.

Further, participation of human operators in traditional inspection operations inhibits the ability to conduct operations during periods of loss of signal.

Accordingly, there is a need for an improved system and method for performing inspection operations for robotic systems that overcomes at least some of the disadvantages of existing systems and methods.

### Summary

An autonomous inspection system for detecting and avoiding threats during operation of a robotic system comprising a robotic device is provided. The robotic device is configured to perform a series of robotic operations each including a path and a trajectory. The autonomous inspection system includes: a memory device for storing data; and a processor in communication with the memory device and for processing the data stored by the memory device, the processor configured to execute at least one of: an autonomous sensing of unexpected obstacles (ASUO) software tool; a model-based collision avoidance (MBCA) software tool; a worksite surveyor (WS) software tool; and a vision-guided motion (VGM) software tool.

In some embodiments, the robotic device is a robotic manipulator.

In some embodiments, the ASUO software tool is configured to identify discrepancies between a modelled world of an environment of the robotic device and a real world of the robotic device.

In some embodiments, the MBCA software tool is configured to check a planned path of the robotic device for potential collisions.

In some embodiments, the WS software tool is configured to perform automated visual inspection of a worksite in which the robotic device is operating using images taken by one or more worksite cameras prior to proximity operations.

In some embodiments, the VGM software tool is configured to perform incremental look-and-move fine alignment maneuvers to correct pose misalignments to a fixed target computed using one or more machine vision cameras.

In some embodiments, the processor is further configured to execute a checkout and inspection recommender (CIR) software tool configured to recommend insertion of checkouts and inspections into a task performed by the robotic device.

In some embodiments, the robotic device further includes an end effector mounted on a free end of the robotic manipulator, and the end effector performs a grappling operation on a payload.

In some embodiments, the end effector further provides an auxiliary service to the payload through the end effector while the payload is grappled.

In some embodiments, the processor is configured to execute the ASUO software tool and the MBCA software tool, and the MBCA software tool is executed autonomously for a next planned trajectory of the robotic device only if an output of the ASUO software tool indicates no obstacle was detected in the path of the robotic device.

In some embodiments, the ASUO software tool is configured to register observation data comprising lidar data and optical data to as-built models of a worksite in which the robotic device is operating, compare the registered data to one or more collision models that have been configured based on scene context, and determine whether any obstacles are present.

In some embodiments, the MBCA software tool is configured to: use input configuration information and collision models for each element present in the scene, place the collision models in appropriate locations in space and determine which collision checks should be performed; and identify a potential collision situation by determining whether a collision model of the robotic device comes within a clearance threshold of other bodies' collision models in the scene.

In some embodiments, a control device controlling the robotic device performs the next planned trajectory of the robotic device if an output of the MBCA tool identifies a potential collision situation ("PCS").

In some embodiments, the processor is further configured to execute the WS software tool autonomously once the robotic device has reached a designated position, the WS software tool configured to compare 3D models of robotic interfaces to capture images of a robotic interface to be operated on by the robotic device and determine if there are any anomalies.

In some embodiments, the processor is further configured to execute the VGM software tool autonomously upon determination by the WS software tool that there are no anomalies, the VGM software tool configured to estimate a pose of the robotic interface corresponding to a machine vision target near the robotic interface relative to the robotic device using a pose estimation algorithm, an input image of the machine vision target, and a target ID of the machine vision target.

In some embodiments, the WS tool is executed before the robotic device performs an operation on the robotic interface and after the robotic device performs an operation on the robotic interface.

In some embodiments, the robotic device is a robotic manipulator with an end effector on a free end of the robotic manipulator, the robotic operation is a grappling operation by the end effector, and the robotic interface is a grapple fixture mounted to a payload, the grapple fixture grappled and rigidized by the end effector.

In some embodiments, the end effector and the grapple fixture have complementary coupling elements that interlock to limit or prevent radial movement of the grapple fixture relative to the end effector when the grapple fixture is rigidized.

A method of autonomously detecting and avoiding threats during operation of a robotic system is also provided. The method includes: executing, via one or more processors, at least one of: an autonomous sensing of unexpected obstacles (ASUO) software tool; a model-based collision avoidance (MBCA) software tool; a worksite surveyor (WS) software tool; and a vision-guided motion (VGM) software tool.

In some embodiments, the robotic device is a robotic manipulator.

In some embodiments, the ASUO tool is configured to identify discrepancies between a modelled world of an environment of the robotic device and a real world of the robotic device.

In some embodiments, the MBCA tool is configured to check a planned path of the robotic device for potential collisions.

In some embodiments, the WS tool is configured to perform automated visual inspection of a worksite in which the robotic device is operating using images taken by one or more worksite cameras prior to proximity operations.

In some embodiments, the VGM tool is configured to perform incremental look-and-move fine alignment maneuvers to correct pose misalignments to a fixed target computed using one or more machine vision cameras.

In some embodiments, the method further includes executing by the one or more processors a checkout and inspection recommender (CIR) software tool configured to recommend insertion of checkouts and inspections into a task performed by the robotic device.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of an autonomous robotic servicing system, according to an embodiment;
Figure 2 is a block diagram of the robotic arm controller of Figure 1, according to an embodiment;
Figure 3 is a block diagram of the autonomy processing device of Figure 2, according to an embodiment;
Figure 4 is a block diagram of the autonomous function software of Figure 3 in further detail, according to an embodiment;
Figure 5 is a flow diagram of an example autonomous inspection operation performed using the system of Figure 1, according to an embodiment; and
Figure 6 is a flow diagram of a vision guided motion autonomous function executed during the grapple fixture grapple operation of Figure 5, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to space-based robotics, and more particularly to systems and methods for autonomous robotic operations in space. It should be noted that the systems and methods described herein may be applied to robotics applications other than space, and may be particularly well suited to applications where a reduction in manpower is an asset (e.g., medicine, manufacturing) and applications that are remote and/or hazardous to humans (e.g., nuclear, deep sea, space missions).

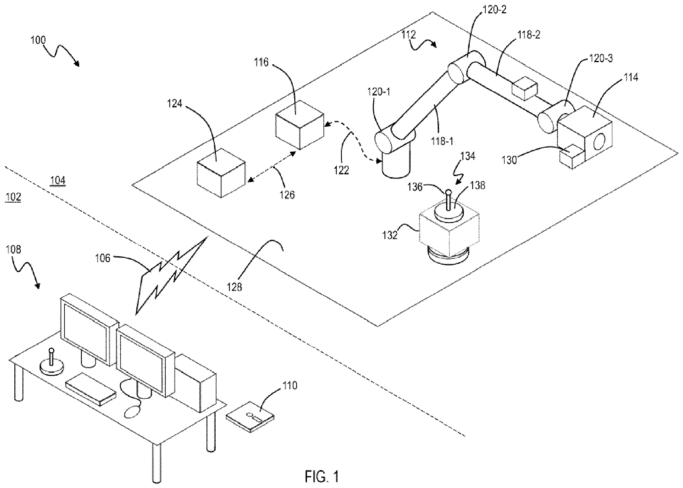

Referring now to Figure 1, shown therein is a robotic system 100, according to an example embodiment. The robotic system 100 is a space-based robotic system. The robotic system 100 may be a robotic servicing system. The robotic servicing system may be configured to provide mechanical (e.g., payload manipulation, torqueing) and electrical services (e.g., power transfer, data transfer).

The system 100 includes a ground segment 102 and a space segment 104. The ground segment 102 and space segment 104 are in communication with one another via communication link 106. The communication link 106 includes an uplink and downlink. The manner of uplink and downlink, including any necessary hardware, software, and infrastructure, may be any suitable manner of such communication known in the art. Ground segment 102 may be used to send commands or instructions to space segment 104 and to receive data from space segment 104.

The ground segment 102 includes a robotic ground operator station 108 (or robotic workstation 108). The operator station 108 includes one or more computing systems including processors and memories storing processor executable instructions, as well as user interfaces and user input devices for the operator to interact with the computer system and control the space segment 102 components. The computer system of ground segment 102 executes ground segment software 110 for performing the functions of the operator station 108.

The space segment 102 includes a robotic device 112 for performing robotic functions and operations. The robotic device 112 in system 100 is a robotic manipulator (or robotic arm). In other embodiments, the robotic device 112 may be any other type of robotic device that may utilize or benefit from the autonomous methods and operations described herein.

In an embodiment, the robotic device 112 is a robotic manipulator configured to have end effectors (e.g., end effector 114) on the base and tip of the robot 112. A base grapple fixture is a base interface that the robotic device 112 is connected to and is used to provide the robotic device 112 with power and data. While the tip end effector remains free to maneuver and manipulate objects. When performing a walk-off using the robotic device 112, the tip end of the manipulator 112 connects to another grapple fixture with the intent of the base end disconnecting and moving to a new position, thereby becoming the tip/free end of the manipulator 112. Changing the base grapple fixture includes turning off any data and power coming from the old base and turning on data and power on the new base end.

The robotic manipulator 112 includes an end effector 114 (or end of arm tool 114) coupled to a free end of the robotic manipulator 112. The robotic manipulator 112 manipulates, moves, and positions the end effector 114. The end effector 114 may be an end effector that can be picked up and removed by the robotic manipulator 102.

The robotic system 100 includes a control device 116 executing control software for controlling movement of the robotic manipulator 102. The robotic manipulator 102 includes booms 118-1, 118-2 and joints 120-1, 120-2, and 120-3 for articulating the manipulator 102. Control device 116 may be implemented at a single device or across a plurality of devices.

Generally, the control device 116 controls movement (e.g., rotation) of the joints 120-1, 120-2, and 120-3, thereby enabling controlled movement of the robotic manipulator 102 and ultimately of the end effector 114. The manipulator 102 and control device 116 are communicatively connected and the connection is represented as a hashed line 122 between the manipulator 102 and control device 116. Control device 116 may include computing components (e.g., processors, data storage) and other control hardware.

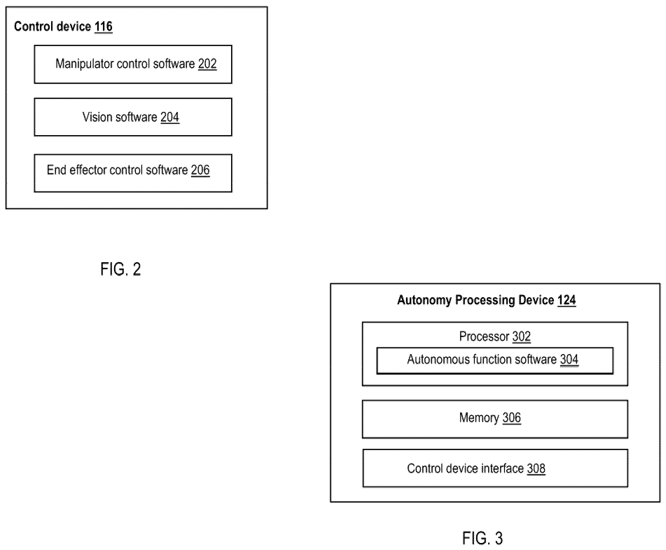

An example of the control device 116 is shown in Figure 2, according to an embodiment. The control device 116 includes manipulator control software 202, vision software 204, and end effector control software 206. The manipulator control software 202, when executed by a processor of the control device 116, controls articulation and movement of the manipulator 112, such as through controlling the articulation of joints 118. The manipulator control software 202 may receive sensor data from sensors in or on the manipulator 112 and other input data, process the input data, and generate control instructions based on the processing and send the control instructions to the manipulator 112 for execution. The vision software 204, when executed by a processor of the control device 116, processes image data acquired by vision components in the space segment 104, such as camera 130. Processing may include, for example, processing image data of a machine vision marker on payload 132 or determining a pose of the marker or payload 132 (e.g., via executing a pose estimation algorithm). The end effector control software 206, when executed, controls operation of the end effector 114. This may include operations such as grappling and provision of auxiliary services (e.g., torque transfer, power, data).

The space segment 104 further includes an autonomy processing device 124. The autonomy processing device 124 is configured to execute encoded process-executable instructions for performing autonomous robotic operations with the robotic manipulator 112.

The autonomy processing device 124 is in communication with control device 116 via communication link 126. The autonomy processing device 124 may receive and process data received from controller device 116. The autonomy processing device 124 may receive and process data received from operator station 108.

The robotic manipulator 112, controller device 116, and autonomy processing device 124 are coupled to platform 128. In a space-based application, the platform 101 may be a satellite or spacecraft bus, or vehicle platform (e.g., on a rover or the like). In some embodiments, robotic manipulator 112, controller device 116, and autonomy processing device 124 may be coupled to different platforms in the space segment 104.

The robotic system 100 further includes a camera vision system 130 for imaging an environment that the robotic manipulator 112 is in. The camera vision system 130 provides image data to the control device 116 and the autonomy processing device 124 that allows the end effector 114 to be positioned in the environment.

In some embodiments, the camera vision system 130 may be configured to capture image data of a machine vision marker present on a payload. The machine vision marker may encode information about the marker or payload (e.g., identifying information, physical properties, etc.). The captured image data may then be processed by the control device 116 or autonomy processing device 124 to identify the machine vision marker and/or the payload. In some cases, the identity or other information obtained from processing the image data may be used by the system 100 to determine what operation the manipulator 112 or end effector 114 will perform or to confirm that the payload is the correct payload or payload type to receive the service of the end effector 114.

The end effector 114 is configured to perform one or more robotic functions. The robotic functions may be referred to as or enable the provision of services. For example, the end effector 114 may be configured to grapple and rigidize a payload, transfer torque to a payload, transfer power to a payload, or transfer data to a payload. In some cases, the payload may be a tool, and the end effector 114 is configured to grapple and rigidize the tool and provide one or more services (e.g., mechanical, electrical) to enable operation of the tool and provision of the tool's service. In an example, the tool may be a refueling tool.

The space segment 104 includes a payload 132. The payload 132 is on platform 128. In other embodiments, the payload 132 may be on a different platform from the robotic manipulator 112.

The payload 132 may be any object that is to be interacted with by the robotic manipulator 112 and the end effector 114. For example, the payload 132 may be a payload that is to be moved by the robotic manipulator 112 or serviced by the end effector 114. In a particular example, the payload 132 may be a servicing tool that is configured to provide mechanical or electrical services to another payload.

In another example, the payload 132 may be a free flying object. The free flying object may be a spacecraft that is to be captured and docked to the platform 128.

In some embodiments, the end effector 114 may be a multi-purpose end effector configured to perform multiple robotic functions or interface with multiple different payload types.

The payload 132 has a grapple fixture 134 mounted thereto. The grapple fixture 134 may be a standardized grapple fixture interface. The end effector 114 is configured to grapple the grapple fixture 134 and rigidize the grapple fixture 134, thereby rigidizing the payload 132 to the robotic manipulator 112.

In the embodiment of Figure 1, the grapple fixture 134 includes a grapple probe 136 mounted to a base 138. The base 138 is mounted to the payload 132. The end effector 114 includes a probe guiding surface, a grapple mechanism, and a couple element. The robotic manipulator 112 moves the end effector towards the grapple fixture 134, causing the probe 136 to contact the probe guiding surface of the end effector 114, which guides the probe 136 into the grapple mechanism. The grapple mechanism grabs the probe 136 and retracts the probe 136 to a point at which the grapple fixture 134 is rigidized to the end effector 114. This includes bringing the base 138 into contact with the coupling element on the end effector 114, which may promote alignment of the grapple fixture 134. The profile of the coupling element and the base 138 are complementary. In some cases, the coupling element and the base 138 may be configured such that their mating restricts rotational movement of the grapple fixture 134 (and thus may rigidize in the roll direction).

In other embodiments, such a grapple fixture may not be present and the end effector 114 is configured to grapple the payload 132 without a designated grapple fixture.

In some cases, the payload 132 may include a prepared interface for enabling the end effector 114 to interface in multiple different ways with the payload 132. For example, the prepared interface may include two or more of a grapple fixture 134, a machine vision marker, and at least one auxiliary services module. Auxiliary services may include, for example, a torque receiver (e.g., torque bolt), a power receiving module (electrical connectors), or a data receiving module (data connectors). The auxiliary services module may implement a passthrough functionality which enables the end effector to deliver the auxiliary service to the payload through a standardized interface (the prepared interface).

The space segment 104 of system 100 is configured to perform an inspection operation autonomously. In the example of Figure 1, it may be desired to perform a robotic operation with respect to the payload 132. In a simple example, the robotic operation may include the delivery of an auxiliary service to the payload 132, for example through the end effector 114.

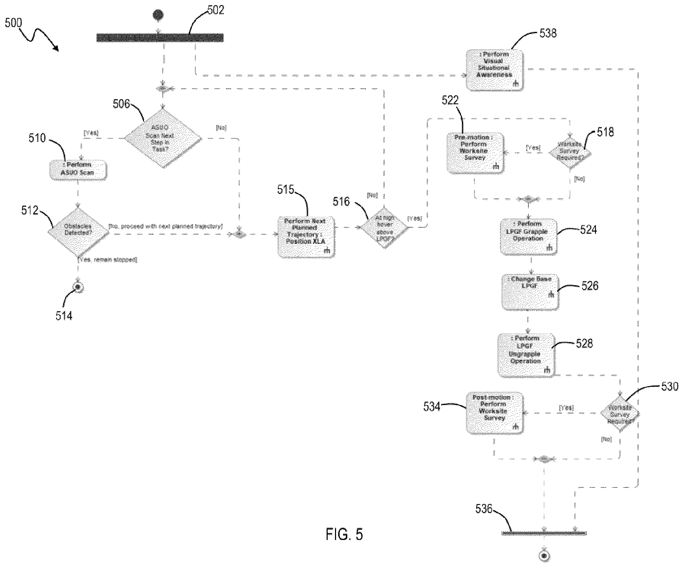

In another example, the robotic operation may be a robotic arm relocation operation or walk-off operation (e.g., using two end effectors). A walk-off operation is a process of having the robotic manipulator 112 move from one grapple fixture 134 that the end effector 114 can connect to another grapple fixture 116. The walk-off process may be performed to move the robotic manipulator 112 around a space station or other area to access payload and perform inspections of areas otherwise outside the reach of robotic manipulator 120. In an embodiment, the walk-off operation follows the flow of Figure 5 (518-536).

Referring now to Figure 3, shown therein is the autonomy processing device 124 of Figure 1 in further detail, according to an embodiment.

The autonomy processing device 124 includes a processor 302, a data storage device or memory 306, and a control device interface 308. The control device interface 308 is used to send data to and receive data from other computing systems, such as control device 116.

The memory 306 stores data that is processed by the processor 302.

The processor 302 is configured to execute autonomous function software 304. The autonomous function software 304 is encoded as processor-executable instructions. The autonomous function software 304 is configured to enable autonomous inspection operations by the space segment 104 of the robotic system 100. This may include performing routine imaging of robotic interfaces, other exposed space infrastructure, or a region of interest in space to verify that no anomalies relevant to operations are present. Software enabling autonomous operations may be encoded as one or more tools or modules directed to specific functions or operations related to autonomous inspection operations.

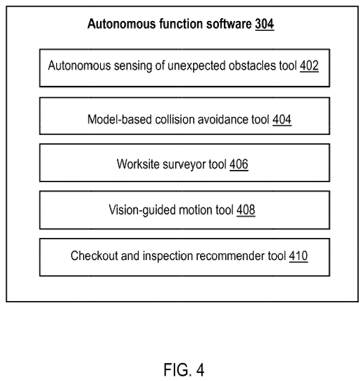

An example of the autonomous function software 304 is shown in further detail in Figure 4, according to an embodiment.

The autonomous function software 304 includes an autonomous sensing of unexpected obstacles (ASUO) tool 402, a model-based collision avoidance (MBCA) tool 404, a worksite surveyor tool 406, a vision guided motion tool 408, and a checkout and inspection recommender tool 410. In variations, the autonomous function software 304 may include only a subset of tools 402-410. For example, in an embodiment, the autonomous function software 304 may not include the checkout and inspection recommender tool 410.

The ASUO tool 402 is configured to identify discrepancies between a modelled world of the environment of the robotic manipulator 112 and the real world of the robotic manipulator 112. In some embodiments, the ASUO tool can be configured to detect micro meteoroids and orbital debris (MMOD) strikes.

The MBCA tool 404 is configured to check a planned path of robotic manipulator 112 for potential collisions.

The worksite surveyor tool 406 is configured to perform automated visual inspection of worksites using images taken by one or more worksite cameras prior to proximity operations.

The vision guided motion tool 408 is configured to perform incremental look-and-move fine alignment maneuvers to correct pose misalignments to a fixed target computed using machine vision cameras (e.g., camera vision system 130).

The checkout and inspection recommender (CIR) tool 410 is configured to recommend insertion of checkouts and inspections into a task performed by the robotic manipulator 112. The CIR tool 410 supports the performance of checkouts and inspections, which may be used to assess and provide data for system health monitoring of the robotic system 100. The CIR tool 410 assesses the need for a checkout or an inspection and may provide a recommendation to the human operator (e.g., at station 108) for incorporation into a task being planned (e.g., for the robotic manipulator 112). A checkout is a diagnostic mechanical check on a mechanism to assess the health of the system. In an example, a checkout may be performed on end effector 114. An inspection is a visual survey that informs upon the physical state of a worksite or component.

Referring now to Figure 5, shown therein a flow diagram of an example autonomous inspection operation 500 performed using the system 100 of Figure 1, according to an embodiment. Processing operations performed during operation 500 may be performed by the autonomy processing device 124 of Figure 1 and by the autonomous function software 304 of Figure 3.

The robotic operation for which the inspection operation 500 is being performed may be, for example, a grappling operation by the end effector 114 of the robotic manipulator 112. In another example, the inspection operation may be a "walk-off" operation. The operation 500 may include one or more tasks. For robotic manipulator 112, the task may include performing a plurality of planned trajectories.

At 502, the inspection operation starts.

At 506, the autonomy processing device 124 determines whether ASUO 402 is to scan a next step in a robotic task. If yes, the flow proceeds to 510. If no, the flow proceeds to 515 (performing next planned trajectory, described below).

At 510, the ASUO tool 402 performs a scan for the next step in the task.

The input to the operation at 510 includes a desired scan which may be defined by parameters (e.g., range, exposure time, etc.). Lidar and camera systems take desired scan parameters and return observation data per those parameters (i.e., over a certain distance, exposure time). The output generated at from the ASUO scan at 510 includes lidar observation data and camera observation data.

At 512, the ASUO tool 402 determines whether there are any obstacles detected in the scan from 510.

The input to the operation at 512 includes telemetry, collision models, a configured scene context, as-built models of the robotic system 100, and the lidar/camera observation data from 510.

The ASUO tool 402 executes an algorithm that uses telemetry as an initialization and performance metric for registering the observation data to as-built models of the robotic system 100. The observation data is registered to the as-built models to obtain registered data. The ASUO tool compares the registered data to collision models to determine if obstacles exist. If no obstacles are detected, the ASUO tool 402 returns safe to proceed and environmental data. Collision models are configured based on the provided scene context.

The output of the operation 512 includes Go/NoGo decision (safe to proceed decision, yes or no). A Go decision may be based on the detection of no obstacles, whereas a NoGo decision may be based on the detection of one or more obstacles. The output of the operation 512 also includes environmental data for logging and human interpretation.

If an obstacle is detected, the flow proceeds to 514 and the robotic manipulator 112 remains stopped.

If no obstacles are detected, the flow proceeds to 515, and the robotic manipulator 112 proceeds with a next planned trajectory.

At 515, a manipulator control system (MCS) (e.g., control device 116) performs a next planned trajectory of the robotic manipulator 112 (position the manipulator 112). The MBCA tool 404 monitors telemetry to perform collision checks.

The input to the operation at 515 includes telemetry, collision models, and the configured scene context.

Using the input configuration information and the collision models for each element present in the scene, the MBCA tool 404 places the collision models in the appropriate location in space and determines which collision checks should be performed.

To perform collision checks, the MBCA 404 takes as input telemetry, and updates the locations of the robotic representation of collision models; a potential collision situation (PCS) is identified by the MBCA tool 404 when the collision model of the robotic arm 112 comes within a clearance threshold of other bodies' collision models in the scene.

The output of the operation 515 includes a Go/NoGo decision (safe to proceed decision, yes or no). Whether the decision is Go or NoGo is based on whether a PCS has been identified by the MBCA tool 404 in the scene.

At 516, the autonomy processing device 124 determines whether the robotic manipulator 112 is at a designated position (e.g., high hover position) above a grapple fixture to be grappled by the end effector 114 on the manipulator 112.

If the manipulator 112 is not at the high hover position, the flow returns to operation 506.

If the manipulator 112 is at the high hover position, the flow proceeds to 518.

At 518, the autonomy processing device 124 determines whether a worksite survey is required. A pre motion survey may be performed before approaching the grapple fixture 134. A post motion survey may be performed when leaving the grapple fixture 134.

If a worksite survey is not required, the flow proceeds to 524.

If a worksite survey is required, the flow proceeds to 522.

At 522, the worksite survey tool 406 performs a pre-motion worksite survey.

The input to the operation at 522 includes telemetry, 3D models, and images.

The worksite surveyor tool 406 compares the 3D models of robotics interfaces to captured images of the robotic interface to determine if there are any anomalies. If no anomalies are detected, the worksite surveyor tool 406 returns safe to proceed and environmental data.

The output of the operation 522 includes a Go/NoGo decision (safe to proceed, yes or no) based on whether anomalies were detected. The output also includes environmental data for logging and later human interpretation. If a NoGO decision is determined by the survey, the flow 500 stops.

If the worksite surveyor 406 outputs that it is safe to proceed, the flow proceeds to 524.

At 524, the end effector 114 on the robotic manipulator 112 performs a grapple operation on the grapple fixture 134. The grapple operation may be performed as described elsewhere herein.

The grapple operation at 524 is performed using vision guided motion tool 408.

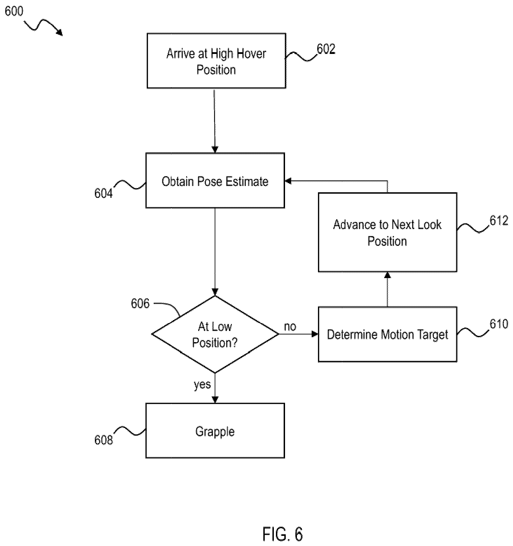

Referring now to Figure 6, shown therein is a method 600 of autonomous vision guided motion 600 executed during the grapple fixture grapple operation 524 of Figure 5, according to an embodiment. The method 600 is supported by the vision guided motion tool 408.

At 602, the robotic manipulator 114 arrives at a high hover position.

At 604, the vision guided motion tool 408 determines a pose estimate.

The input to pose estimate determination includes a target ID and images. The pose estimation identifies a machine vision target of the target ID in an input image and estimates the pose of the robotic interface (corresponding to the machine vision target) relative to the end of the robotic arm 114.

The output of the pose estimation is a pose estimate.

At 606, the vision guided motion tool 408 determines, using the pose estimate, whether the robotic manipulator 114 is at a low position.

If the robotic manipulator is at the low position, the method 600 proceeds to 608.

At 608, the end effector 114 on the robotic manipulator 112 performs the grapple operation on the grapple fixture 134.

If, at 606, the robotic manipulator is not at the low position, the method 600 proceeds to 610.

At 610, the vision guided motion tool 408 determines a motion target.

The input to the motion target determination by the vision guided motion tool 408 includes the pose estimate obtained by the vision guided motion tool 408 at 604.

The vision guided motion tool 408 accepts the pose estimate of the relative position between the robotic interface and the robotic arm 112 and provides a motion target trajectory for the robotic arm 112 based on the distance remaining and the desired low position.

The output of the motion target determination is a motion target.

At 612, the vision guided motion tool 408 advances to a next look position. Advancing to the next look position means moving the robotic arm 112 to the next arm position to acquire the next pose estimate. The vision guided motion sequence is a series of "look and moves". A "look" is where the camera is used to get the pose estimate. The "move" is moving between predetermined poses to approach the robotic interface.

After advancing to the next look position, the method 600 returns to 604, where the vision guided motion tool 408 obtains a pose estimate at the current look position.

Referring again to Figure 5, if the robotic task is a walk-off operation, the flow proceeds from grappling 524 to 526. At 526, the base grapple fixture is changed. This may include having a tip/free end of robotic manipulator 112 connect to another grapple fixture 134 while the base of the manipulator 112 is attached to a first grapple fixture (the base interface is used to provide the manipulator 112 with power and data). The base of the manipulator then disconnects for the first grapple fixture and becomes the tip/free end of the manipulator 112 (as the previous tip/free end is connected to the second grapple fixture and now acting as base). Changing the base grapple fixture includes turning off any data and power coming from the old base and turning on data and power on the new based end.

In other embodiments, after grappling at 524, the robotic manipulator 112 may manipulate or move the payload 132 to which the grapple fixture 134 is coupled, may provide an auxiliary service through an interface in the end effector 114 (e.g., fuel transfer, torque transfer, power transfer, data transfer), or may perform some other task.

At 528, the end effector 114 of the robotic manipulator performs an ungrapple operation on the grapple fixture 134 to release the grapple fixture 134.

Once the grapple fixture 134 is ungrappled, the flow proceeds to 530.

At 530, the autonomy processing device 124 determines whether a worksite survey is required.

If a worksite survey is not required, the flow proceeds to 536.

If a worksite survey is required, the flow proceeds to 534.

At 534, the worksite survey tool 406 performs a post-motion worksite survey.

The input to the operation at 534 includes telemetry, 3D models, and images.

The worksite surveyor tool 406 compares the 3D models of robotics interfaces to captured images of the robotic interface to determine if there are any anomalies. If no anomalies are detected, the worksite surveyor tool 406 returns safe to proceed and environmental data.

The output of the operation 522 includes a Go/NoGo decision (safe to proceed, yes or no) based on whether anomalies were detected. The output also includes environmental data for logging and later human interpretation. If there is a NoGo determination at 534, the flow 500 is stopped.

If the worksite surveyor 406 outputs that it is safe to proceed, the flow proceeds to 536.

At 536, the inspection operation ends.

The operation also includes performing visual situational awareness at 538.

While the above description provides examples of one or more apparatus, methods, or systems, it will be appreciated that other apparatus, methods, or systems may be within the scope of the claims as interpreted by one of skill in the art.

## Claims

1. An autonomous inspection system for detecting and avoiding threats during operation of a robotic system comprising a robotic device, the robotic device configured to perform a series of robotic operations each including a path and a trajectory, the autonomous inspection system comprising:
a memory device for storing data; and
a processor in communication with the memory device and for processing the data stored by the memory device, the processor configured to execute at least one of:
an autonomous sensing of unexpected obstacles (ASUO) software tool;
a model-based collision avoidance (MBCA) software tool;
a worksite surveyor (WS) software tool; and
a vision-guided motion (VGM) software tool.

2. The system of claim 1, wherein the robotic device is a robotic manipulator.

3. The system of claim 1, wherein the ASUO software tool is configured to identify discrepancies between a modelled world of an environment of the robotic device and a real world of the robotic device.

4. The system of claim 1, wherein the MBCA software tool is configured to check a planned path of the robotic device for potential collisions.

5. The system of claim 1, wherein the WS software tool is configured to perform automated visual inspection of a worksite in which the robotic device is operating using images taken by one or more worksite cameras prior to proximity operations.

6. The system of claim 1, wherein the VGM software tool is configured to perform incremental look-and-move fine alignment maneuvers to correct pose misalignments to a fixed target computed using one or more machine vision cameras.

7. The system of claim 1, wherein the processor is further configured to execute a checkout and inspection recommender (CIR) software tool configured to recommend insertion of checkouts and inspections into a task performed by the robotic device.

8. The system of claim 2, wherein the robotic device further includes an end effector mounted on a free end of the robotic manipulator, and wherein the end effector performs a grappling operation on a payload.

9. The system of claim 8, wherein the end effector further provides an auxiliary service to the payload through the end effector while the payload is grappled.

10. The system of claim 8, wherein the processor is configured to execute the ASUO software tool and the MBCA software tool, and wherein the MBCA software tool is executed autonomously for a next planned trajectory of the robotic device only if an output of the ASUO software tool indicates no obstacle was detected in the path of the robotic device.

11. The system of claim 10, wherein the ASUO software tool is configured to register observation data comprising lidar data and optical data to as-built models of a worksite in which the robotic device is operating, compare the registered data to one or more collision models that have been configured based on scene context, and determine whether any obstacles are present.

12. The system of claim 11, wherein the MBCA software tool is configured to:
use input configuration information and collision models for each element present in the scene, place the collision models in appropriate locations in space and determine which collision checks should be performed; and
identify a potential collision situation by determining whether a collision model of the robotic device comes within a clearance threshold of other bodies' collision models in the scene.

13. The system of claim 12, wherein a control device controlling the robotic device performs the next planned trajectory of the robotic device if an output of the MBCA tool does not identify a potential collision situation (PCS).

14. The system of claim 12, wherein the processor is further configured to execute the WS software tool autonomously once the robotic device has reached a designated position, the WS software tool configured to compare 3D models of robotic interfaces to capture images of a robotic interface to be operated on by the robotic device and determine if there are any anomalies.

15. The system of claim 14, wherein the processor is further configured to execute the VGM software tool autonomously upon determination by the WS software tool that there are no anomalies, the VGM software tool configured to estimate a pose of the robotic interface corresponding to a machine vision target near the robotic interface relative to the robotic device using a pose estimation algorithm, an input image of the machine vision target, and a target ID of the machine vision target.
